# FASCICULE DE BREVET EUROPEEN

(11) **EP 1 398 209 B1**
(45) Date de publication et mention de la délivrance du brevet: **03.08.2005**
(21) Numéro de dépôt: 03356132.5
(22) Date de dépôt: 11.09.2003
(51) Int. Cl.: B60Q 1/04, B60Q 1/26

(54) **Agencement pour la fixation d'un dispositif d'éclairage ou de signalisation sur un support aménagé sur un véhicule automobile**
Anordnung für die Befestigung einer Beleuchtung- oder Signal-Einrichtung auf einem Kfz angeordneten Träger
Arrangement to fasten a lighting or signaling device on a support provided on a vehicle

(30) Priorité: 12.09.2002 FR 0211463
(43) Date de publication de la demande: 17.03.2004
(73) Titulaire: Vignal Systems, 69200 Venissieux (FR); Polyrim, 07100 Saint-Marcel les Annonay (FR)
(72) Inventeur: Antri, Angelo, 07370 Eclassan (FR); Fichet, Jérôme, 07100 Annonay (FR)
(74) Mandataire: Bratel, Gérard

(56) Documents cités:
- EP-A- 0 649 773
- EP-A- 1 026 336
- DE-A- 19 806 690
- US-A- 5 114 203
- US-A- 5 143 331

## Description

La présente invention concerne de manière générale les systèmes de fixation d'un dispositif d'éclairage ou de signalisation sur un véhicule, et en particulier sur une partie de sa carrosserie, ou sur une aile de véhicule industriel.

De façon connue, plusieurs modes de fixation peuvent être utilisés. Selon une première conception, le dispositif d'éclairage ou de signalisation comporte des pattes dont l'extrémité est formée avec une ouverture destinée à être traversée par une vis de fixation sur le véhicule. Les pattes sont moulées par injection en même temps que le boîtier, de sorte que le moule utilisé pour ce boîtier est relativement complexe et onéreux.

Selon une deuxième conception, le dispositif d'éclairage ou de signalisation comporte des vis, typiquement deux vis, noyées dans le boîtier et faisant saillie vers l'extérieur. La fixation du dispositif d'éclairage ou de signalisation est obtenue en faisant pénétrer par l'extérieur ces vis dans des ouvertures d'une partie de la carrosserie du véhicule, puis en serrant un écrou sur cette vis par l'intérieur de la partie de carrosserie sur laquelle est fixé le dispositif d'éclairage ou de signalisation. Outre le fait de solidariser l'extrémité d'une vis métallique dans une matière moulable par injection, cette conception présente l'inconvénient d'une grande complexité de montage, l'espace nécessaire pour avoir accès à la vis et y installer l'écrou, puis le serrer étant le plus souvent très réduit.

On connaît d'autre part du document DE-A-198 06 690 un dispositif de maintien démontable d'un élément de construction sur un élément de support. la pièce de construction comporte des pions en forme de champignons formés d'une tige cylindrique portant à son extrémité une rondelle de diamètre supérieur à celui de la tige. Ces pions sont destinés à coopérer avec des ouvertures de l'élément de support, formées d'une partie circulaire et d'une partie oblongue. Le blocage de l'élément de construction en position sur l'élément de support est obtenu par des pattes formées à l'extrémité de languettes élastiques de l'élément de construction et pénétrant dans des ouvertures de l'élément de support.

La présente invention se place dans ce contexte et elle a pour but de proposer un agencement pour la fixation d'un dispositif d'éclairage ou de signalisation sur un support aménagé sur un véhicule automobile qui permette d'assurer simplement cette fixation, par des moyens simples à mettre en oeuvre, peu onéreux et fiables.

La présente invention a donc pour objet un agencement pour la fixation d'un dispositif d'éclairage ou de signalisation sur un support aménagé sur un véhicule automobile, le dispositif d'éclairage ou de signalisation comportant dans un boîtier différentes fonctions d'éclairage ou de signalisation.

Selon la présente invention, le boîtier est formé avec au moins un plot comportant une tige cylindrique s'étendant vers l'extérieur du boîtier, la longueur de la tige étant sensiblement égale à l'épaisseur du support aménagé sur le véhicule, l'extrémité de la tige étant solidaire d'une rondelle de diamètre supérieur à celui de la tige, et la rondelle d'extrémité de la tige est reçue dans une ouverture formée dans le support aménagé, cette ouverture ayant une partie de forme circulaire de diamètre légèrement supérieur à celui de la rondelle d'extrémité de la tige et étant prolongée selon une direction diamétrale par une ouverture oblongue de largeur légèrement supérieure au diamètre de la tige, des moyens étant prévus pour maintenir la tige au fond borgne de l'ouverture oblongue, les moyens pour maintenir la tige au fond borgne de l'ouverture oblongue comprenant un élément de verrouillage, pouvant occuper une position d'installation permettant l'introduction des rondelles dans les parties circulaires des ouvertures du support et la translation du dispositif d'éclairage ou de signalisation par rapport au support dans la direction diamétrale, et une position de blocage interdisant le mouvement des rondelles dans la direction diamétrale.

Selon d'autres caractéristiques avantageuses et non limitatives de l'agencement selon l'invention :
- L'élément de verrouillage comporte une partie de blocage et une partie de fermeture.
- La partie de blocage est formée avec au moins un bossage interdisant le mouvement des rondelles dans la direction diamétrale, et au moins un creux autorisant ce mouvement.
- La partie de fermeture de l'élément de verrouillage comporte un élément de condamnation interdisant le mouvement de l'élément de verrouillage dans une direction perpendiculaire à la direction diamétrale.
- L'élément de verrouillage est mobile dans une glissière formée dans le support du côté opposé à celui qui reçoit le dispositif d'éclairage ou de signalisation.
- Le boîtier comporte au moins deux plots, le support est formé avec au moins deux ouvertures, et les centres géométriques des ouvertures formées dans le support sont disposés les uns par rapport aux autres de la même façon que sont disposés les axes des plots du dispositif d'éclairage ou de signalisation.
- Au moins deux ouvertures sont prévues pour avoir leur centres géométriques alignés dans une direction perpendiculaire à la direction diamétrale.

D'autres buts, caractéristiques et avantages de la présente invention ressortiront clairement de la description qui va maintenant être faite d'un exemple de réalisation, en référence aux dessins annexés sur lesquels :
- La Figure 1 représente une vue en perspective d'un dispositif d'éclairage ou de signalisation installé sur un véhicule à l'aide d'un agencement selon la présente invention,
- La Figure 2 représente une vue en perspective d'un élément de verrouillage mis en oeuvre dans l'agencement selon la présente invention,
- La Figure 3 représente une vue en perspective d'une portion de la partie située à l'extérieur du support aménagé sur le véhicule, dans une première position de l'organe de verrouillage,
- La Figure 4 représente une vue en perspective d'une portion de la partie située à l'extérieur du support aménagé sur le véhicule, dans une deuxième position de l'organe de verrouillage, et
- La Figure 5 représente une vue en perspective d'une portion de la partie située à l'intérieur du support aménagé sur le véhicule, dans la première position de l'organe de verrouillage.

Sur les différentes Figures, les éléments identiques ou jouant le même rôle sont affectés des mêmes signes de référence.

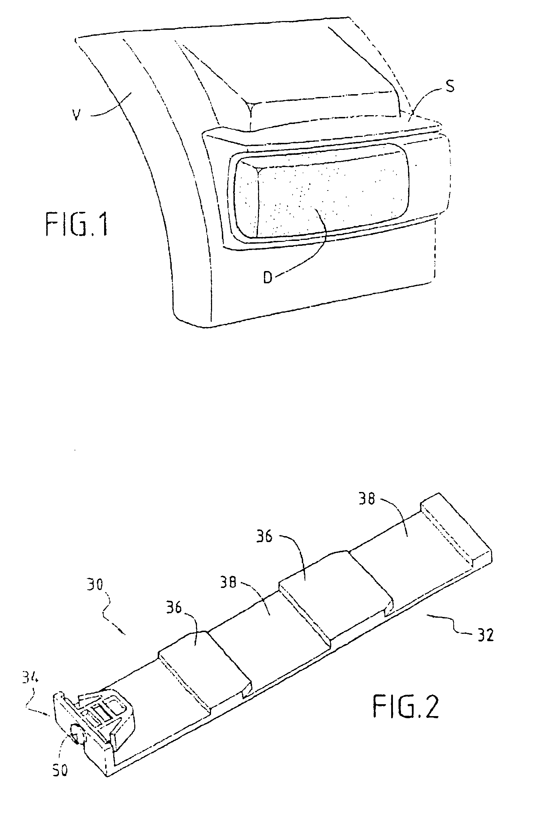

On a représenté sur la Figure 1 une partie V d'un véhicule sur laquelle a été installé un dispositif d'éclairage ou de signalisation D en utilisant d'un agencement selon la présente invention. La partie V de véhicule peut être une partie de carrosserie, ou, comme dans l'exemple représenté, une extrémité d'une aile d'un véhicule industriel tel qu'un tracteur de semi-remorque. Cette partie V a été spécialement conformée, comme on le verra par la suite, pour recevoir le dispositif D. En particulier, un support S a été aménagé sur cette partie pour être apte à recevoir le dispositif D.

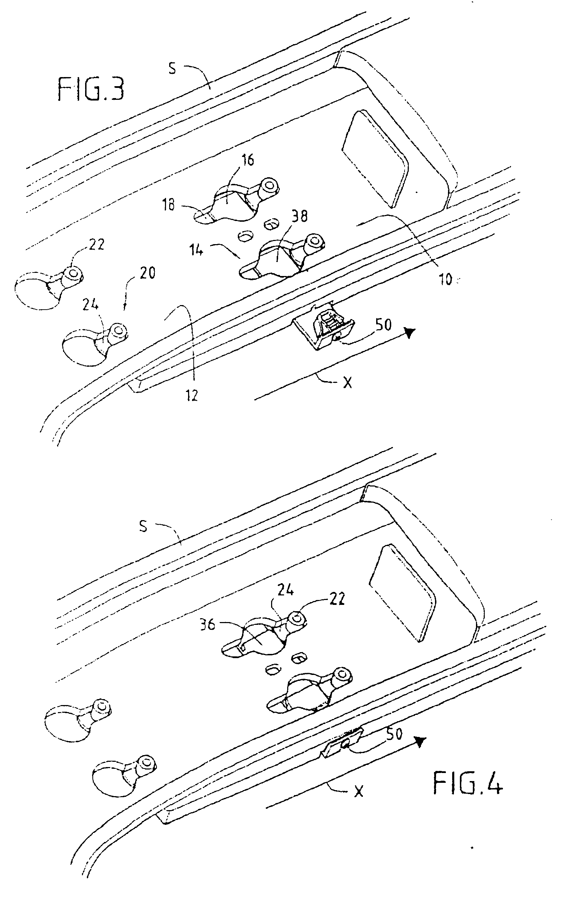

Comme on le voit mieux sur la Figure 3, le support S comporte une empreinte en creux 10 apte à recevoir un boîtier (non représenté) d'un dispositif d'éclairage ou de signalisation. Sur le fond plan 12 de cette empreinte 10, des ouvertures 14 ont été formées, quatre ouvertures dans l'exemple représenté. Ces ouvertures ont globalement une partie de forme circulaire 16, prolongée selon une direction diamétrale X par au moins une ouverture oblongue 18.

Le dispositif d'éclairage ou de signalisation D comporte un boîtier (non représenté) réunissant différentes fonctions d'éclairage ou de signalisation, qui ne font pas partie de la présente invention. Le boîtier comporte des plots ou boutonnières 20 identiques, venus de matière avec lui, ou rapportés, par exemple par vissage, sur lui. Ces plots ou boutonnières 20 s'étendent à partir du fond plat du boîtier, perpendiculairement à ce fond.

Chaque plot 20 comporte une tige cylindrique 22, s'étendant vers l'extérieur du boîtier, la longueur de la tige 22 étant sensiblement égale à l'épaisseur du support S aménagé sur le véhicule. L'extrémité de la tige 22 est solidaire d'une rondelle 24 de diamètre supérieur à celui de la tige 22 et légèrement inférieur à celui de la partie de forme circulaire 16 des ouvertures 14.

A la lecture de ce qui précède, on aura compris comment on peut installer le dispositif d'éclairage ou de signalisation D sur la partie faisant support S. On présente le fond du boîtier du dispositif D de telle manière que les rondelles 24 pénètrent dans les parties de forme circulaire 16 des ouvertures 14. De manière à ce que ces rondelles 24 soient guidées vers ces ouvertures, on pourra prévoir que l'empreinte en creux 10 du support S ait des dimensions telles qu'elle les reçoive avec un jeu faible, au moins dans une direction perpendiculaire à la direction diamétrale X dans laquelle s'étendent les ouvertures oblongues 18. De cette manière, une simple translation du dispositif D selon cette direction diamétrale X permettra de placer les différentes rondelles en face des parties de forme circulaire 16 des ouvertures 14.

A cet effet, les centres géométriques des ouvertures 14 formées dans le support S seront disposés les uns par rapport aux autres de la même façon que sont disposés les axes des tiges 22 du dispositif D. De préférence, au moins deux ouvertures 14 seront prévues pour avoir leur centres géométriques alignés dans une direction perpendiculaire à la direction diamétrale X.

Une fois que les rondelles ont pénétré dans les ouvertures 14, il suffit de faire subir au dispositif D une translation selon la direction X, pour amener les tiges 22 au fond des ouvertures oblongues 18. Un tel mouvement est rendu possible par la longueur de la tige 22 qui est sensiblement égale à l'épaisseur du support S. Une telle disposition rend également impossible le mouvement du dispositif D perpendiculairement au plan du fond 12 de l'empreinte 10.

Il suffit alors de bloquer le dispositif D dans cette position. A cet effet, un élément de verrouillage 30, plus particulièrement représenté sur la Figure 2, peut être utilisé. L'élément de verrouillage 30 est formé ici d'une partie de blocage de forme globalement plane et rectangulaire 32, dont l'un des petits côtés est prolongé à angle droit par une partie de fermeture 34.

La partie de blocage 32 comporte des bossages rectangulaires 36, au nombre de deux dans l'exemple représenté, espacés de la même distance que celle qui sépare deux ouvertures 14 dans le support S dans la direction X, elle-même égale à la distance qui sépare deux tiges 22 dans cette même direction X. Les bossages 36 définissent entre eux un creux 38, l'un des bossages 36 définissant également un creux 38 avec l'extrémité libre de la partie de blocage 32, sur laquelle est formée une nervure terminale 40. Les bossages 36 ont une hauteur, par rapport aux creux 38, égale à l'épaisseur des rondelles 24. De préférence, les creux 38 sont de forme carrée, leur côté étant de longueur légèrement supérieure au diamètre des rondelles 24.

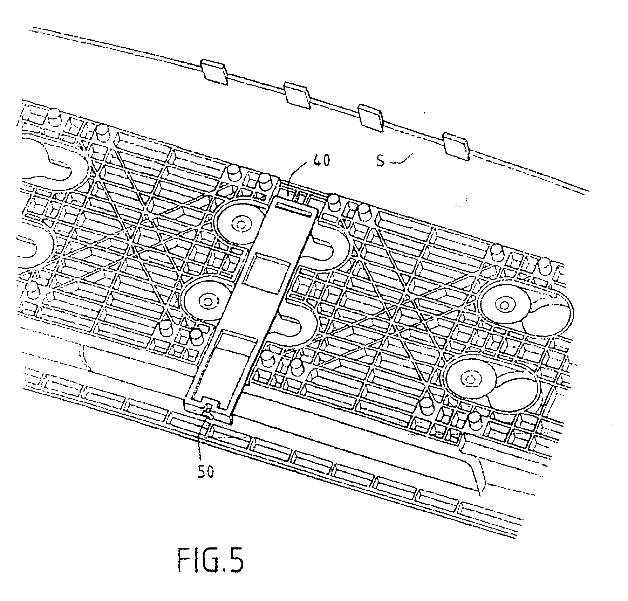

Comme on peut le voir sur la Figure 5, l'élément de verrouillage 30 est disposé dans une glissière 40, formée dans le support S du côté opposé à celui qui reçoit le dispositif D, et elle est susceptible de pouvoir coulisser dans cette glissière 40 selon une direction perpendiculaire à la direction X.

Lorsque l'élément de verrouillage 30 est en position sortie, ainsi qu'on l'a représenté sur la Figure 3, les creux 38 sont situés en face des parties de forme circulaire 16 des ouvertures 14. Dans cette position, il est possible d'introduire les rondelles 24 dans les parties circulaires 16, et de les faire se mouvoir dans la direction X en effectuant une translation du dispositif D dans l'empreinte 10 du support S.

Lorsque les tiges 22 sont en butée au fond des ouvertures oblongues 18, il est alors possible de repousser l'élément de verrouillage 30 en direction du dispositif D. Il prend alors la position représentée sur la Figure 4. Ce mouvement a pour effet d'amener les bossages 36 en face des parties de forme circulaire 16 des ouvertures 14. Ce mouvement a également pour effet d'amener les bossages 36 dans l'alignement des rondelles 24 selon la direction X, empêchant ainsi tout mouvement dans le sens opposé à la direction X, et résultant en un blocage du dispositif D dans cette position.

On peut alors assurer la permanence de cette position de blocage de l'élément de verrouillage 30, en prévoyant sur la partie de fermeture 34 une condamnation, par exemple à l'aide d'une vis 50 traversant une ouverture de la partie de fermeture 34 et s'engageant dans une partie faisant face du support. En variante, on pourra prévoir que la vis 50 soit prisonnière de la partie de fermeture 34, et coopère avec un système de cheville à expansion 52, de manière à enserrer une paroi du support S.

On a donc bien réalisé selon la présente invention un agencement pour la fixation d'un dispositif d'éclairage ou de signalisation sur un support aménagé sur un véhicule automobile qui permet d'assurer simplement cette fixation, par des moyens particulièrement simples à mettre en oeuvre, peu onéreux et fiables.

Bien entendu, la présente invention n'est pas limitée au mode de réalisation qui a été décrit, mais l'homme du métier pourra au contraire lui apporter de nombreuses modifications qui rentrent dans le cadre des revendications annexées.

## Revendications

1. Agencement pour la fixation d'un dispositif d'éclairage ou de signalisation (D) sur un support (S) aménagé sur un véhicule automobile (V), le dispositif d'éclairage ou de signalisation (D) comportant dans un boîtier différentes fonctions d'éclairage ou de signalisation, le boîtier étant formé avec au moins un plot (20) comportant une tige cylindrique (22) s'étendant vers l'extérieur du boîtier, la longueur de la tige (22) étant sensiblement égale à l'épaisseur du support (S) aménagé sur le véhicule, l'extrémité de la tige (22) étant solidaire d'une rondelle (24) de diamètre supérieur à celui de la tige (22), la rondelle (24) d'extrémité de la tige (22) étant reçue dans une ouverture (14) formée dans le support aménagé (S), cette ouverture (14) ayant une partie de forme circulaire (16) de diamètre légèrement supérieur à celui de la rondelle (24) d'extrémité de la tige (22) et étant prolongée selon une direction diamétrale (X) par une ouverture oblongue (18) de largeur légèrement supérieure au diamètre de la tige (22), des moyens (30) étant prévus pour maintenir la tige (22) au fond borgne de l'ouverture oblongue (18), les moyens (30) pour maintenir la tige (22) au fond borgne de l'ouverture oblongue (18) comprenant un élément de verrouillage (30), **caractérisé en ce que** l'élément de verrouillage peut occuper une position d'installation permettant l'introduction des rondelles (24) dans les parties circulaires (16) des ouvertures (14) du support (S) et la translation du dispositif d'éclairage ou de signalisation (D) par rapport au support (S) dans la direction diamétrale (X), et une position de blocage interdisant le mouvement des rondelles (24) dans la direction diamétrale (X).

2. Agencement selon la revendication 1, **caractérisé en ce que** l'élément de verrouillage (30) comporte une partie de blocage (32) et une partie de fermeture (34).

3. Agencement selon la revendication 2, **caractérisé en ce que** la partie de blocage (32) est formée avec au moins un bossage (36) interdisant le mouvement des rondelles (24) dans la direction diamétrale (X), et au moins un creux (38) autorisant ce mouvement.

4. Agencement selon la revendication 3, **caractérisé en ce que** la partie de fermeture (34) de l'élément de verrouillage (30) comporte un élément de condamnation interdisant le mouvement de l'élément de verrouillage (30) dans une direction perpendiculaire à la direction diamétrale (X).

5. Agencement selon l'une quelconque des revendications 1 à 4, **caractérisé en ce que** l'élément de verrouillage (30) est mobile dans une glissière (40) formée dans le support (S) du côté opposé à celui qui reçoit le dispositif d'éclairage ou de signalisation (D).

6. Agencement selon l'une quelconque des revendications 1 à 5, **caractérisé en ce que** le boîtier comporte au moins deux plots (20), **en ce que** le support (S) est formé avec au moins deux ouvertures (14), et **en ce que** les centres géométriques des ouvertures (14) formées dans le support (S) sont disposés les uns par rapport aux autres de la même façon que sont disposés les axes des plots (20) du dispositif d'éclairage ou de signalisation (D).

7. Agencement selon l'une quelconque des revendications 1 à 6, **caractérisé en ce qu'**au moins deux ouvertures (14) sont prévues pour avoir leur centres géométriques alignés dans une direction perpendiculaire à la direction diamétrale (X).

8. Utilisation de l'agencement selon l'une quelconque des revendications 1 à 7, pour la fixation d'un dispositif d'éclairage ou de signalisation (D) sur une extrémité d'une aile (V) d'un véhicule industriel.

## Patentansprüche

1. Anordnung für die Befestigung einer Beleuchtungs- oder Signal-Einrichtung (D) auf einem Kraftfahrzeug (V) angeordneten Träger (S), die Beleuchtungs- oder Signal-Einrichtung (D) in einem Gehäuse verschiedene Beleuchtungs- oder Signalfunktionen umfassend, das Gehäuse ausgebildet mit wenigstens einem Kontakt (20), der einen zylindrischen Stift (22) umfasst, der sich in Richtung zur Gehäuseaußenseite erstreckt, die Länge des Stifts (22) in etwa gleich der Dicke des auf dem Kraftfahrzeug angeordneten Trägers (S) betragend, das Ende des Stifts (22) verbunden mit einer Scheibe (24), deren Durchmesser größer als derjenige des Stiftes (22) ist, die Scheibe (24) am Ende des Stiftes (22) aufgenommen in einer im angeordneten Träger (S) ausgebildeten Öffnung (14), diese Öffnung (14) mit einem kreisförmigen Abschnitt, dessen Durchmesser etwas größer ist als derjenige der Scheibe (24) am Ende des Stiftes (22) und in einer diametralen Richtung (X) mittels einer länglichen Ausnehmung (18) verlängert ist, deren Breite gegenüber dem Durchmesser des Stiftes (22) etwas größer ist, Mittel (30) vorgesehen, um den Stift (22) an der Abschlusswand der länglichen Öffnung (18) zu halten, die Mittel (30) zum Halten des Stiftes (22) an der Abschlusswand der länglichen Öffnung (18) umfassend ein Verriegelungselement (30), **dadurch gekennzeichnet, dass** das Verriegelungselement eine Montageposition einnehmen kann, die das Einführen der Scheiben (24) in die kreisförmigen Abschnitte (16) der Öffnungen (14) des Trägers (S) und die Verschiebung der Beleuchtungs- oder Signal-Einrichtung (D) in Bezug auf den Träger (S) in diametraler Richtung (X) erlaubt, und eine Blockierposition einnehmen kann, die die Bewegung der Scheiben (24) in diametraler Richtung (X) sperrt.

2. Anordnung nach Anspruch 1, **dadurch gekennzeichnet, dass** das Verriegelungselement (30) einen Blockierabschnitt (32) und einen Verschlussabschnitt (34) umfasst.

3. Anordnung nach Anspruch 2, **dadurch gekennzeichnet, dass** der Blockierabschnitt (32) mit wenigstens einer Erhöhung (36) zum Sperren der Bewegung der Scheiben (24) in diametraler Richtung (X) und mit wenigstens einer Ausnehmung (38) zur Ermöglichung dieser Bewegung ausgebildet ist.

4. Anordnung nach Anspruch 3, **dadurch gekennzeichnet, dass** der Verschlussabschnitt (34) des Verriegelungselements (30) ein Verstellelement zum Sperren der Bewegung des Verriegelungselements (30) in einer Richtung senkrecht zur diametralen Richtung (X) umfasst.

5. Anordnung nach einem der Ansprüche 1 bis 4, **dadurch gekennzeichnet, dass** das Verriegelungselement (30) in einer Schiene (40) beweglich ist, die im Träger (S) an gegenüberliegenden Seiten, an denen die Beleuchtungs- oder Signal-Einrichtung (D) aufgenommen ist, ausgebildet ist.

6. Anordnung nach einem der Ansprüche 1 bis 5, **dadurch gekennzeichnet, dass** das Gehäuse wenigstens zwei Kontakte (20) umfasst, dass der Träger (S) mit wenigstens zwei Öffnungen (14) ausgebildet ist, und dass die geometrischen Mittelpunkte der im Träger (S) ausgebildeten Öffnungen (14) in Bezug untereinander in der gleichen Weise angeordnet sind, wie die Achsen der Kontakte (20) der Beleuchtungs- und Signal-Einrichtung (D).

7. Vorrichtung nach einem der Ansprüche 1 bis 6, **dadurch gekennzeichnet, dass** wenigstens zwei Öffnungen (14) vorgesehen sind, deren geometrische Mittelpunkte in einer Richtung senkrecht zur diametralen Richtung (X) in einer Linie ausgerichtet sind.

8. Verwendung der Anordnung nach einem der Ansprüche 1 bis 7 zur Befestigung einer Beleuchtungs- oder Signal-Einrichtung (D) auf einem Rand eines Kotflügels (V) eines Industriefahrzeugs.

## Claims

1. Arrangement for fixing a lighting or signalling device (D) on a support (S) which is provided on a motor vehicle (V), the lighting or signalling device (D) including various lighting or signalling functions in a box, the box being formed with at least one stud (20) including a cylindrical rod (22) which extends towards the exterior of the box, the length of the rod (22) being perceptibly equal to the thickness of the support (S) which is provided on the vehicle, the end of the rod (22) being integral with a washer (24) of diameter greater than that of the rod (22), the washer (24) on the end of the rod (22) being received in an opening (14) which is formed in the provided support (S), this opening (14) having a part of circular form (16) of diameter slightly greater than that of Lhe washer (24) on the end of the rod (22), and being prolonged according to a diametric direction (X) by an oblong opening (18) of width slightly greater than the diameter of Lhe rod (22), means (30) being provided to keep the rod (22) at the blind end of the oblong opening (18), the means (30) to keep the rod (22) at the blind end of the oblong opening (18) comprising a bolting component (30), **characterized in that** the bolting component (30) can occupy an installation position which makes it possible to introduce washers (24) into the circular parts (16) of the openings (14) of the support (S), and to move the lighting or signalling device (D) in relation to the support (S) in the diametric direction (X), and a blocking position preventing the movement of the washers (24) in the diametric direction (X).

2. Arrangement according to Claim 1, **characterized in that** the bolting component (30) includes a blocking part (32) and a closing part (34).

3. Arrangement according to Claim 2, **characterized in that** the blocking part (32) is formed with at least one boss (36) which prevents the movement of the washers (24) in the diametric direction (X), and at least one cavity (38) which allows this movement.

4. Arrangement according to Claim 3, **characterized in that** the closing part (34) of the bolting component (30) includes a locking component which prevents the movement of the bolting component (30) in a direction perpendicular to the diametric direction (X).

5. Arrangement according to any one of Claims 1 to 4, **characterized in that** the bolting component (30) is mobile in a slide (40) which is formed in the support (S) on the side opposite to that which receives the lighting or signalling device (D).

6. Arrangement according to any one of Claims 1 to 5, **characterized in that** the box includes at least two studs (20), **in that** the support (S) is formed with at least two openings (14), and **in that** the geometrical centres of the openings (14) which are formed in the support (S) are arranged in relation to each other in the same way that the axes of the studs (20) of the lighting or signalling device (D) are arranged.

7. Arrangement according to any one of Claims 1 to 6, **characterized in that** at least two openings (14) are intended to have their geometrical centres aligned in a direction perpendicular to the diametric direction (X).

8. Use of the arrangement according to any one of Claims 1 to 7, to fix a lighting or signalling device (D) on an extremity of a wing (V) of an industrial vehicle.
